(19)

Europäisches
Patentamt
European
Patent Office
Office européen
des brevets

(11)  EP 3 845 604 A1

(12)  EUROPEAN PATENT APPLICATION
published in accordance with Art. 153(4) EPC

(43) Date of publication:
07.07.2021  Bulletin 2021/27

(51) Int Cl.:
C08L 101/00 (2006.01)      C08L 1/04 (2006.01)
C09D 7/65 (2018.01)        C09D 201/00 (2006.01)

(21) Application number: 19854912.3

(22) Date of filing: 19.06.2019

(86) International application number:
PCT/JP2019/024254

(87) International publication number:
WO 2020/044742 (05.03.2020 Gazette 2020/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(30) Priority: 30.08.2018  JP 2018161510

(71) Applicant: Nippon Paper Industries Co., Ltd.
Tokyo 114-0002 (JP)

(72) Inventors:
• SAKAMAKI, Midori
Tokyo 114-0002 (JP)
• YAGI, Tomohiro
Tokyo 114-0002 (JP)

(74) Representative: Kuhnen & Wacker
Patent- und Rechtsanwaltsbüro PartG mbB
Prinz-Ludwig-Straße 40A
85354 Freising (DE)

(54)  **RESIN COMPOSITION, AQUEOUS RESIN COMPOSITION, COATING MATERIAL AND METAL**

(57)  A resin composition according to the present invention contains: at least one resin that is selected from among an epoxy resin, a urethane resin, a fluorine resin, a silicone resin, an acrylic resin and a vinyl resin; and anion-modified cellulose nanofibers.

EP 3 845 604 A1

**Description**

{Technical Field}

The present invention relates to a resin composition and an aqueous resin composition, each of which contains a cellulose nanofiber, a coating material containing the resin composition, and a metal provided with a coating film obtained by applying the coating material to the metal.

{Background Art}

In general, a metal is coated with a coating material containing a resin in order to prevent corrosion, and a coating film to be formed by coating a metal is required to have various properties depending on the application of the metal. For example, in a case where the metal is used for a can for food or drink, the coating film to be formed on the inner surface of the can is required to be non-toxic, excellent in the adhesiveness and workability, and the like without impairing the flavor of the content.

Conventionally, as the coating material for coating a metal, a solvent-based coating material in which a resin is dissolved in a solvent is used in many cases, but various water-based coating materials have also been proposed from the viewpoint of environmental protection or the like (for example, Patent Literature 1 or the like).

{Citation List}

{Patent Literature}

Patent Literature 1: JP H05-194908 A

{Summary of Invention}

{Technical Problem}

As such a coating material for coating a metal, a material capable of obtaining a coating film that is more excellent in the adhesion, the strength, and the smoothness than ever before has been demanded.

In view of this, an object of the present invention is to provide a resin composition capable of obtaining a coating film that is excellent in the adhesion, the strength, and the smoothness. Further, an object of the present invention is to provide a coating material containing the resin composition, and a metal provided with a coating film obtained by applying the coating material to the metal.

{Solution to Problem}

As a result of intensive studies to achieve the purpose described above, the present inventors have found that it is extremely effective to mix anion-modified cellulose nanofibers (CNF) with a resin composition, and thus have completed the present invention.

The present invention provides:

(1) A resin composition, including at least one resin selected from an epoxy resin, a urethane resin, a fluorine resin, a silicone resin, an acrylic resin, and a vinyl-based resin, and an anion-modified cellulose nanofiber.
(2) The resin composition described in (1), in which the anion-modified cellulose nanofiber is a carboxymethylated cellulose nanofiber, or a 2,2,6,6-tetramethylpiperidine-1-oxy radical (TEMPO) oxidized cellulose nanofiber.
(3) The resin composition described in (1) or (2), in which the resin composition is an aqueous resin composition.
(4) A coating material, including the resin composition described in any one of (1) to (3).
(5) A metal, including a coating film obtained by applying the coating material described in (4) to the metal.

{Advantageous Effects of Invention}

According to the present invention, a resin composition capable of obtaining a coating film that is excellent in the adhesion, the strength, and the smoothness can be provided. Further, according to the present invention, a coating material containing the resin composition, and a metal provided with a coating film obtained by applying the coating material to the metal can be provided.

{Description of Embodiments}

Hereinafter, the present invention will be described in detail. In the present invention, the expression "to" includes values at both ends. That is, the expression "X to Y" includes values of the X and Y at both ends.

The resin composition according to the present invention contains at least one resin selected from an epoxy resin, a urethane resin, a fluorine resin, a silicone resin, an acrylic resin, and a vinyl-based resin; and an anion-modified cellulose nanofiber.

(Anion-modified cellulose nanofiber)

The anion-modified cellulose nanofiber to be used in the present invention is a fine fiber obtained by subjecting an anion-modified cellulose-based raw material, which is obtained by anion-modifying a cellulose-based raw material, to disintegration treatment.

(Average fiber diameter, and average fiber length)

The average fiber diameter of the anion-modified cellulose nanofibers to be used in the present invention is preferably 1 to 200 nm, and more preferably around 2 to 100 nm. The average fiber length of the anion-modified cellulose nanofibers to be used in the present invention is preferably 40 to 3,000 nm, and more preferably around 100 to 1,500 nm. The average fiber diameter of and average fiber length of cellulose nanofibers can be obtained by averaging the fiber diameters and fiber lengths, which are obtained from the results of the observation of respective fibers with the use of a scanning electron microscope (SEM), an atomic force microscope (AFM), or a transmission electron microscope (TEM).

(Average aspect ratio)

The average aspect ratio of the anion-modified cellulose nanofibers to be used in the present invention is usually 10 or more. The upper limit is not particularly limited, and is usually 1000 or less. The average aspect ratio can be calculated by the following equation:

$$\text{Aspect ratio} = \text{average fiber length} / \text{average fiber diameter}$$

(Cellulose-based raw material)

As the cellulose-based raw material, materials originating from: a plant (for example, wood, bamboo, hemp, jute, kenaf, farm wastes, cloth, pulp (softwood unbleached kraft pulp (NUKP), softwood bleached kraft pulp (NBKP), hardwood unbleached kraft pulp (LUKP), hardwood bleached kraft pulp (LBKP), softwood unbleached sulfite pulp (NUSP), softwood bleached sulfite pulp (NBSP), thermomechanical pulp (TMP), regenerated pulp, used paper or the like); an animal (for example, ascidians); algae; microorganisms (for example, acetic acid bacteria (Acetobacter)); a product produced by microorganisms; and the like are known, and any of them can be used in the present invention. A cellulose fiber derived from a plant or microorganisms is preferred, and a cellulose fiber derived from a plant is more preferred.

(Anionic modification)

Anionic modification refers to the introduction of an anionic group into cellulose, and specifically, the introduction of an anionic group into a pyranose ring by oxidation or substitution reaction. In the present invention, the oxidation reaction refers to a reaction in which a hydroxyl group of a pyranose ring is directly oxidized to a carboxy group. Further, in the present invention, the substitution reaction refers to a reaction in which an anionic group is introduced into a pyranose ring by substitution reaction other than the oxidation.

(Oxidation)

As the anion-modified cellulose, oxidized (carboxylated) cellulose can be used. The oxidized cellulose (also referred to as "carboxylated cellulose") can be obtained by oxidizing (carboxylating) the above-described cellulose-based raw material by a known method. The amount of carboxy groups is not particularly limited, and is preferably 0.6 to 3.0 mmol/g with respect to the bone dry mass of the anion-modified cellulose nanofibers, and more preferably 1.0 to 2.0 mmol/g. An example of the oxidation (carboxylation) method includes a method in which a cellulose-based raw material is oxidized in water by using an oxidizing agent in the presence of an N-oxyl compound and a compound selected from the group consisting of a bromide, an iodide, and a mixture thereof. By this oxidation reaction, a primary hydroxyl group at the C6-position of a glucopyranose ring on a surface of the cellulose is selectively oxidized, and a cellulose fiber having an aldehyde group and a carboxy group (-COOH) or a carboxylate group (-COO-) on the surface can be obtained. The concentration of cellulose during the reaction is not particularly limited, and is preferably 5% by mass or less.

The N-oxyl compound refers to a compound capable of generating a nitroxy radical. As the N-oxyl compound, any compound can be used as long as it is a compound that promotes the desired oxidation reaction. Examples of the N-oxyl compound include 2,2,6,6-tetramethylpiperidine-1-oxy radical (TEMPO), and a derivative thereof (for example, 4-hydroxy TEMPO). The amount of the N-oxyl compound to be used is not particularly limited as long as it is a catalyst amount enough to oxidize the cellulose-based raw material. For example, the amount is preferably 0.01 to 10 mmol, more preferably 0.01 to 1 mmol, and furthermore preferably 0.01 to 0.5 mmol, per gram of the bone-dry cellulose-based raw material. Further, the amount may be around 0.1 to 4 mmol/L to the reaction system.

The bromide refers to a compound containing bromine, and an example of the compound includes an alkali metal bromide that can be dissociated and ionized in water. Further, the iodide refers to a compound containing iodine, and an example of the compound includes an alkali metal iodide. The amount of the bromide or iodide to be used can be selected in the range that can promote the oxidation reaction. For example, the total amount of the bromide and the iodide is preferably 0.1 to 100 mmol, more preferably 0.1 to 10 mmol, and furthermore preferably 0.5 to 5 mmol, per gram of the bone-dry cellulose-based raw material. The modification is a modification by oxidation reaction.

As the oxidizing agent, a known one can be used, and for example, a halogen, a hypohalous acid, a halous acid, a perhalogen acid or a salt thereof, a halogen oxide, a peroxide, or the like can be used. Among them, sodium hypochlorite that is inexpensive and has low environmental load is preferred. For example, the adequate amount of the oxidizing agent to be used is preferably 0.5 to 500 mmol, more preferably 0.5 to 50 mmol, and furthermore preferably 2.5 to 25 mmol, per gram of the bone-dry cellulose-based raw material. Further, for example, the adequate amount is preferably 1 to 40 mol per mole of the N-oxyl compound.

During the oxidation step of the cellulose-based raw material, the reaction efficiently proceeds even under relatively mild conditions. Accordingly, the reaction temperature is preferably 4 to 40°C, or may also be a room temperature of around 15 to 30°C. As the reaction proceeds, a carboxy group is generated in the cellulose, and as a result, the pH of the reaction mixture is decreased. In order to allow the oxidation reaction to proceed efficiently, it is preferable that an alkaline solution such as an aqueous sodium hydroxide solution is added into the reaction system as needed to maintain the pH of the reaction mixture at 9 to 12, and preferably around 10 to 11. As the reaction medium, water is preferred because it is easy to handle, the side reactions are unlikely to occur, and the like. The reaction time of the oxidation reaction can be appropriately set in accordance with the degree of the progress of oxidation, and is usually 0.5 to 6 hours, for example, around 0.5 to 4 hours.

In addition, the oxidation reaction may be performed by dividing into two stages. For example, by oxidizing again the oxidized cellulose, which has been obtained by the filtration after completion of the first-stage reaction, under the same or different reaction conditions, a carboxy group can be efficiently introduced into the cellulose-based raw material without receiving the reaction inhibition by a by-product salt in the first-stage reaction.

Another example of the oxidation (carboxylation) method includes a method of oxidation by ozone treatment, but in the present invention, it is preferable to use the TEMPO-oxidized CNF obtained by disintegrating the oxidized cellulose that has been obtained by a method of oxidation with TEMPO (TEMPO oxidation).

The amount of the carboxy groups with respect to the bone dry mass of cellulose nanofiber, contained in the oxidized cellulose nanofiber that is obtained by modifying a cellulose raw material by oxidation is preferably 0.6 mmol/g or more, more preferably 0.8 mmol/g or more, and furthermore preferably 1.0 mmol/g or more. The upper limit is preferably 2.2 mmol/g or less, more preferably 2.0 mmol/g or less, and furthermore preferably 1.8 mmol/g or less. Accordingly, the amount of the carboxy groups is preferably 0.6 to 2.2 mmol/g, more preferably 0.8 to 2.0 mmol/g, and furthermore preferably 1.0 to 1.8 mmol/g.

The amount of carboxy groups of oxidized cellulose can be adjusted by controlling the amount of the above-described oxidizing agent to be added, and the reaction condition such as reaction time. The amount of the carboxy groups in the oxidized cellulose and the amount of the carboxy groups in the cellulose nanofibers are usually the same.

In the present invention, in the oxidized cellulose obtained in the above step, the carboxy group introduced into the cellulose-based raw material is usually a salt type, and is an alkali metal salt such as a sodium salt. Before the disintegration step, for the alkali metal salt of oxidized cellulose, another cation salt such as a phosphonium salt, an imidazolinium salt, an ammonium salt, or a sulfonium salt may be substituted. The substitution can be performed by a known method.

(Carboxymethylation)

A preferable anion group includes a carboxyalkyl group such as a carboxymethyl group. The carboxyalkylated cellulose may be obtained by a known method, or a commercially available product may be used as the carboxyalkylated cellulose. It is preferable that the degree of substitution with carboxyalkyl group per anhydroglucose unit in cellulose is less than 0.60. Further, in a case where the anion group is a carboxymethyl group, the degree of substitution with carboxymethyl group is preferably less than 0.60. If the degree of substitution is 0.60 or more, the crystallinity is decreased, and the proportion of dissolved components is increased, and therefore, the function as a nanofiber is lost. In addition, the lower limit value of the degree of substitution with carboxyalkyl group is preferably 0.01 or more. In view of the operability, the degree of substitution is particularly preferably 0.02 to 0.50, and more preferably 0.10 to 0.30. An example of the method for producing such a carboxyalkylated cellulose includes a method containing the following steps. The modification is a modification by substitution reaction. The modification will be described by taking the carboxymethylated cellulose as an example.

i) A step of mixing a starting material, a solvent, and a mercerizing agent with one another, and mercerizing the obtained mixture at a reaction temperature of 0 to 70°C and preferably 10 to 60°C for a reaction time of 15 minutes to 8 hours and preferably 30 minutes to 7 hours; and next

ii) a step of adding a carboxymethylation agent in an amount of 0.05 to 10.0 molar equivalents per glucose residue, and performing an etherification reaction at a reaction temperature of 30 to 90°C and preferably 40 to 80°C for a reaction time of 30 minutes to 10 hours and preferably 1 to 4 hours.

As the starting material, the above-described cellulose-based raw material can be used. As the solvent, 3 to 20 times by mass of water or lower alcohol can be used, and in specific, water, methanol, ethanol, N-propyl alcohol, isopropyl alcohol, N-butanol, isobutanol, tertiary butanol, and the like can be used alone, or in combination of two or more kinds thereof as a mixed medium. In a case where lower alcohol is mixed, the mixing proportion is 60 to 95% by mass. As the mercerizing agent, an alkali metal hydroxide in specific, sodium hydroxide, or potassium hydroxide in an amount of 0.5 to 20 molar equivalents per anhydroglucose residue of the starting material can be used.

As described above, the degree of substitution with carboxymethyl group per glucose unit in cellulose is less than 0.06, and is preferably 0.01 or more and less than 0.60. By introducing a carboxymethyl substituent into cellulose, the celluloses electrically repel each other. For this reason, the cellulose into which a carboxymethyl substituent has been introduced can be easily disintegrated into nanofibers. In this regard, if the carboxymethyl substituent per glucose unit is smaller than 0.02, the disintegration into nanofibers may not be sufficient in some cases. The degree of substitution in the carboxylmethylated cellulose and the degree of substitution in the cellulose nanofibers are usually the same.

In the present invention, in the carboxyalkylated cellulose obtained in the above step, the carboxyalkyl group introduced into the cellulose-based raw material is usually a salt type, and is an alkali metal salt such as a sodium salt. Before the disintegration step, for the alkali metal salt of carboxyalkylated cellulose, another cation salt such as a phosphonium salt, an imidazolinium salt, an ammonium salt, or a sulfonium salt may be substituted. The substitution can be performed by a known method.

(Esterification)

As the anion-modified cellulose, esterified cellulose can be used. As the method, a method in which a powder or aqueous solution of a phosphoric acid-based compound A is mixed with a cellulose-based raw material, a method in which an aqueous solution of a phosphoric acid-based compound A is added to a slurry of a cellulose-based raw material, or the like can be included. Examples of the phosphoric acid-based compound A include phosphoric acid, polyphosphoric acid, phosphorous acid, hypophosphorous acid, phosphonic acid, polyphosphonic acid, and esters thereof. These may be in a form of a salt. Among them, for the reasons, for example, of a low cost and an easy-to-handle, and capable of achieving the improvement of disintegration efficiency by introducing phosphate groups into cellulose of pulp fibers, a compound having a phosphate group is preferred. Examples of the compound having a phosphate group include phosphoric acid, sodium dihydrogenphosphate, disodium hydrogen phosphate, trisodium phosphate, sodium phosphite, potassium phosphite, sodium hypophosphite, potassium hypophosphite, sodium pyrophosphate, sodium metaphosphate, potassium dihydrogen phosphate, dipotassium hydrogen phosphate, tripotassium phosphate, potassium pyrophosphate, potassium metaphosphate, ammonium dihydrogen phosphate, diammonium hydrogen phosphate, triammonium phosphate, ammonium pyrophosphate, and ammonium metaphosphate. These can be used alone or in combination of two or more kinds thereof to introduce a phosphate group. Among them, from the viewpoints of high efficiency of introduction of phosphate groups, easy disintegration in the following disintegration step, and easy industrial application, phosphoric acid, a sodium salt of phosphoric acid, a potassium salt of phosphoric acid, and an ammonium salt of phosphoric acid are preferred. In particular, sodium dihydrogen phosphate, and disodium hydrogen phosphate are preferred. Further, since the reaction can proceed uniformly and further the efficiency of introduction of phosphate groups becomes high, it is desirable to use the phosphoric acid-based compound A as an aqueous solution. Since the efficiency of introduction of phosphate groups becomes high, it is preferable that the pH of the aqueous solution of the phosphoric acid-based compound A is 7 or less, but from the viewpoint of suppressing the hydrolysis of pulp fibers, the pH is preferably 3 to 7.

As an example of the method for producing a phosphorylated cellulose, the following method can be included. Into a suspension of a cellulose-based raw material having a solid content concentration of 0.1 to 10% by mass, a phosphoric acid-based compound A is added while being stirred to introduce phosphate groups into the cellulose. When the cellulose-based raw material is set as 100 parts by mass, the amount of the phosphoric acid-based compound A to be added is preferably 0.2 to 500 parts by mass, and more preferably 1 to 400 parts by mass, as the phosphorus element content. If the proportion of the phosphoric acid-based compound A is the above-described lower limit value or more, the yield of the cellulose in a microfibrous form can be further improved. However, if the proportion exceeds the above-described upper limit value, the effect of improving the yield reaches the peak, and therefore, such a proportion is not preferable from the viewpoint of cost.

In addition to the phosphoric acid-based compound A, a powder or aqueous solution of a compound B may be mixed. The compound B is not particularly limited, and is preferably a nitrogen-containing compound having basicity. The expression "basicity" referred to herein is defined as an aqueous solution exhibiting pink to red color in the presence of a phenolphthalein indicator, or an aqueous solution having a pH larger than 7. The nitrogen-containing compound having basicity, which is used in the present invention, is not particularly limited as long as it exerts the effects of the present invention, and is preferably a compound having an amino group. Examples of the compound include urea, methylamine, ethylamine, trimethylamine, triethylamine, monoethanolamine, diethanolamine, triethanolamine, pyridine, ethylenediamine, and hexamethylenediamine. Among them, urea, which is low cost and easy to handle, is preferred. The amount of the compound B to be added is preferably 2 to 1000 parts by mass, and more preferably 100 to 700 parts by mass, per 100 parts by mass of the solid content of the cellulose-based raw material. The reaction temperature is preferably 0 to 95°C, and more preferably 30 to 90°C. The reaction time is not particularly limited, and is around 1 to 600 minutes, and more preferably 30 to 480 minutes. If the conditions of the esterification reaction are within these ranges, the cellulose can be prevented from being excessively esterified and easily dissolved, and the yield of the phosphorylated cellulose becomes favorable. After the dehydration of the obtained phosphorylated cellulose suspension, it is preferable that the heat treatment is performed at 100 to 170°C from the viewpoint of suppressing the hydrolysis of cellulose. Further, when water is still contained during the heat treatment, the heating is performed at 130°C or less and preferably 110°C or less, and after the water is removed, the heat treatment is performed preferably at 100 to 170°C.

The degree of substitution with phosphate group per glucose unit of the phosphorylated cellulose is preferably 0.001 or more and less than 0.40. By introducing a phosphate group substituent into the cellulose, the celluloses electrically repel each other. For this reason, the cellulose into which a phosphate group has been introduced can be easily disintegrated into nanofibers. If the degree of substitution with phosphate group per glucose unit is smaller than 0.001, the cellulose cannot be disintegrated into nanofibers sufficiently. On the other hand, if the degree of substitution with phosphate group per glucose unit is larger than 0.40, the cellulose swells or dissolves, and therefore, may not be obtained as nanofibers. In order to efficiently perform the disintegration, it is preferable that the phosphorylated cellulose-based raw material obtained as in the above is boiled, and then a washing treatment such as washing with cold water is performed. These modifications by esterification are modifications by substitution reaction. The degree of substitution in the phosphorylated cellulose and the degree of substitution in the cellulose nanofibers are usually the same.

In the present invention, in the phosphorylatd cellulose obtained in the above step, the phosphate group introduced into the cellulose-based raw material is usually a salt type, and is an alkali metal salt such as a sodium salt. Before the disintegration step, for the alkali metal salt of phosphorylated cellulose, another cation salt such as a phosphonium salt, an imidazolinium salt, an ammonium salt, or a sulfonium salt may be substituted. The substitution can be performed by a known method.

(Disintegration)

In the present invention, the device for disintegrating an anion-modified cellulose-based raw material is not particularly limited, and it is preferable that by using a device such as a high-speed rotary type, a colloid mill type, a high pressure type, a roll mill type, or an ultrasonic type, strong shear force is applied to the anion-modified cellulose-based raw material (water dispersion usually). In particular, in order to efficiently perform the disintegration, it is preferable that a pressure of 50 MPa or more is applied to the anion-modified cellulose-based raw material (water dispersion usually), and further a wet high-pressure or ultra-high-pressure homogenizer that can apply strong shear force is used. The pressure is more preferably 100 MPa or more, and furthermore preferably 140 MPa or more. Further, prior to the disintegration and dispersion treatment by a high-pressure homogenizer, a pretreatment may be performed if necessary. The pretreatment can be performed by using a known mixing, stirring, emulsifying or dispersing device such as a high-speed shear mixer. The number of treatments (passes) in the disintegration device may be once or twice or more, and is preferably twice or more.

In the dispersion treatment, in general, anion-modified cellulose is dispersed in a solvent. The solvent is not particularly limited as long as it can disperse the anion-modified cellulose, and examples of the solvent include water, an organic solvent (for example, a hydrophilic organic solvent such as methanol), and mixed solvents thereof.

The solid content concentration of the anion-modified cellulose in dispersion is usually 0.1% by mass or more, and preferably 0.2% by mass or more, and more preferably 0.3% by mass or more. With such a concentration, the amount of liquid becomes adequate to the amount of cellulose-based raw material, and is efficient. The upper limit is usually 10% by mass or less, and preferably 6% by mass or less. In this way, the fluidity can be retained.

Prior to the disintegration treatment or the dispersion treatment, a pretreatment may be performed if necessary. The pretreatment may be performed by using a mixing, stirring, emulsifying or dispersing device such as a high-speed shear mixer.

In the present invention, in a case where the anion-modified cellulose nanofiber obtained through the disintegration step is a salt type, the nanofiber may be used as it is, or alternatively, the anion-modified cellulose nanofiber may be used as an acid type by an acid treatment using a mineral acid, a method using a cation exchange resin, or the like. Further, the nanofiber, to which hydrophobicity is imparted by a method using a cationic additive, may be used.

(Resin)

Examples of the resin to be used in the present invention include an epoxy resin, a urethane resin, a fluorine resin, a silicone resin, an acrylic resin, and a vinyl-based resin, and these can be appropriately selected depending on the application. These resins may be used alone, or in combination of two or more kinds thereof.

(Epoxy resin)

The above epoxy resin may be a resin containing an epoxy compound as a constituent unit, and examples of the constituent monomer include ones obtained by reacting at least one kind of bisphenol A, bisphenol F, bisphenol AD, bisphenol Z, and the like with a glycidyl ethers. Further, as the epoxy resin, various kinds of modified resins can be used.

(Urethane resin)

The above urethane resin may be a resin containing a polyol and a polyisocyanate as the constituent units. Examples of the polyol include a polyester polyol, a polyether polyol, and a polycarbonate polyol. As the polyisocyanate, an aliphatic polyisocyanate can be included, and examples of the polyisocyanate include hexamethylene diisocyanate, isophorone diisocyanate, dicyclohexylmethane diisocyanate, hydrogenated tolylene diisocyanate, hydrogenated xylylene diisocyanate, and hydrogenated methylene diphenyl diisocyanate. Further, as the urethane resin, various kinds of modified resins can be used.

(Fluorine resin)

The above fluorine resin is a resin obtained by polymerizing an olefin containing a fluorine atom, and examples of the fluorine resin include polytetrafluoroethylene (PTFE), polyvinylidene fluoride (PVDF), polyvinyl fluoride (PVF), perfluoroalkoxy alkane (PFA), a tetrafluoroethylene/hexafluoropropylene copolymer (FEP), and an ethylene/tetrafluoroethylene copolymer (ETFE).

(Silicone resin)

As the above silicone resin, a partially hydrolyzed condensate of alkyl silicate, or a modified product thereof can be included.

As such a partially-hydrolyzed condensate, for example, a hydrolyzed condensate of alkyl silicate, which is represented by the general formula $R^1{}_nSi(OR^2)_{4-n}$ (wherein $R^1$ represents an organic group having 1 to 8 carbon atoms, $R^2$ represents an alkyl group having 1 to 5 carbon atoms, and n is 0 or 1), can be suitably included. In the above-described formula, examples of the organic group as $R^1$ include an alkyl group, a cycloalkyl group, an aryl group, and a vinyl group. In this regard, the alkyl group may be a linear or branched alkyl group. Examples of the alkyl group include alkyl groups such as a methyl group, an ethyl group, an n-propyl group, an i-propyl group, an n-butyl group, an i-butyl group, a s-butyl group, a t-butyl group, a pentyl group, a hexyl group, a heptyl group, and an octyl group. The preferred alkyl group is an alkyl group having 1 to 4 carbon atoms. Examples of the cycloalkyl group suitably include a cyclohexyl group, a cycloheptyl group, and a cyclooctyl group. Examples of the aryl group include a phenyl group, and a naphthyl group.

Each of the above functional groups may optionally have a substituent. Examples of such a substituent include a halogen atom (for example, a chlorine atom, a bromine atom, or a fluorine atom), a (meth)acryloyl group, an amino group, a mercapto group, a glycidoxy group, an epoxy group, and an alicyclic group. The alkyl group as $R^2$ may be a linear or branched alkyl group. Examples of such an alkyl group include a methyl group, an ethyl group, an n-propyl group, an i-propyl group, an n-butyl group, an i-butyl group, a s-butyl group, a t-butyl group, and a pentyl group. The preferred alkyl group is an alkyl group having 1 to 2 carbon atoms.

Specific examples of the alkyl silicate include an alkyl silicate in a case where n is 0, such as tetramethyl silicate, tetraethyl silicate, tetra-n-propyl silicate, tetra-i-propyl silicate, or tetra-n-butyl silicate; and an alkyl silicate in a case where n is 1, such as methyltrimethoxysilane, methyltriethoxysilane, ethyltrimethoxysilane, ethyltriethoxysilane, n-propyltrimethoxysilane, n-propyltriethoxysilane, i-propyltrimethoxysilane, i-propyltriethoxysilane, γ-glycidoxypropyltrimethoxysilane, γ-glycidoxypropyltriethoxysilane, γ-methacryloxypropyltrimethoxysilane, γ-methacryloxypropyltriethoxysilane, γ-mercaptopropyltrimethoxysilane, γ-mercaptopropyltriethoxysilane, phenyltrimethoxysilane, phenyltriethoxysilane, γ-aminopropyltrimethoxysilane, 3,4-epoxycyclohexylethyltrimethoxysilane, or 3,4-epoxycyclohexylethyltriethoxysilane. These may be used alone, or in combination of two or more kinds thereof. Further, as the silicone resin, various kinds of modified resins can be used.

(Acrylic resin)

The acrylic resin may be a resin containing a (meth)acrylic monomer as a constituent unit, and for example, as the constituent monomer, an alkyl ester of (meth)acrylic acid is preferred, and the alkyl group in this ester has preferably 1 to 10 carbon atoms, and particularly preferably 1 to 8 carbon atoms. The acrylic resin contains at least one kind of, for example, methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, hexyl (meth)acrylate, 2-ethylhexyl (meth)acrylate, and the like, as such a constituent monomer. Further, as the acrylic resin, various kinds of modified resins can be used.

(Vinyl-based resin)

The vinyl-based resin may be a resin containing a compound having a carbon-carbon unsaturated bond (excluding a (meth)acrylic compound such as a (meth)acrylic monomer) as a constituent unit, and the vinyl-based resin contains at least one kind of, for example, vinyl chloride, vinyl acetate, styrene, acrylonitrile, and the like, as such a constituent monomer. Further, as the vinyl-based resin, various kinds of modified resins can be used.

(Resin composition)

The resin composition according to the present invention is obtained by dissolving or dispersing a specific resin and anion-modified cellulose nanofibers as essential components in a solvent.

Examples of the solvent include an aqueous solvent such as water, a hydrophilic organic solvent, or a mixed solvent of water and a hydrophilic organic solvent, and a hydrophobic organic solvent, and these can be appropriately selected depending on the type of the resin, the application of the resin composition, or the like.

Examples of the hydrophilic organic solvent include various kinds of ether alcohols or ethers such as ethylene glycol monomethyl ether, ethylene glycol dimethyl ether, ethylene glycol monoethyl ether, ethylene glycol diethyl ether, ethylene glycol mono(iso)propyl ether, ethylene glycol di(iso)propyl ether, ethylene glycol mono(iso)butyl ether, ethylene glycol di(iso)butyl ether, ethylene glycol mono-tert-butyl ether, ethylene glycol monohexyl ether, 1,3-butylene glycol-3-monomethyl ether, 3-methoxybutanol, 3-methyl-3-methoxybutanol, diethylene glycol monomethyl ether, diethylene glycol dimethyl ether, diethylene glycol monoethyl ether, diethylene glycol diethyl ether, diethylene glycol mono(iso)propyl ether, diethylene glycol di(iso)propyl ether, diethylene glycol mono(iso)butyl ether, diethylene glycol di(iso)butyl ether, diethylene glycol monohexyl ether, diethylene glycol dihexyl ether, triethylene glycol dimethyl ether, propylene glycol monomethyl ether, propylene glycol monoethyl ether, propylene glycol mono(iso)propyl ether, propylene glycol mono(iso)butyl ether, propylene glycol dimethyl ether, propylene glycol diethyl ether, propylene glycol di(iso)propyl ether, propylene glycol di(iso)butyl ether, dipropylene glycol monomethyl ether, dipropylene glycol monoethyl ether, dipropylene glycol mono(iso)propyl ether, dipropylene glycol mono(iso)butyl ether, dipropylene glycol dimethyl ether, dipropylene glycol diethyl ether, diethylene glycol di(iso)propyl ether, and dipropylene glycol di(iso)butyl ether; alcohols such as methyl alcohol, ethyl alcohol, propyl alcohol, isopropyl alcohol, butyl alcohol, isobutyl alcohol, sec-butyl alcohol, tert-butyl alcohol, and furfuryl alcohol; ketones such as methyl ethyl ketone, dimethyl ketone, and diacetone alcohol; glycols such as ethylene glycol, diethylene glycol, propylene glycol, and dipropylene glycol; and alkoxy esters such as ethylene glycol monomethyl ether acetate, ethylene glycol monoethyl ether acetate, 1-methoxy-2-propyl acetate, and propylene glycol monomethyl ether acetate. These may be used alone, or in combination of two or more kinds thereof.

As the hydrophobic organic solvent, an organic solvent having a mass of 10 g or less, preferably 5 g or less, and more preferably 1 g or less, which is dissolved in 100 g of water at 20°C, can be used. Examples of the organic solvent include a hydrocarbon-based solvent such as a rubber solvent, mineral spirit, toluene, xylene, or solvent naphtha; an alcohol-based solvent such as 1-hexanol, 1-octanol, 2-octanol, 2-ethylhexanol, 1-decanol, benzyl alcohol, ethylene glycol mono 2-ethylhexyl ether, propylene glycol mono n-butyl ether, dipropylene glycol mono n-butyl ether, tripropylene glycol mono n-butyl ether, propylene glycol mono 2-ethylhexyl ether, or propylene glycol mono phenyl ether; an ester-based solvent such as n-butyl acetate, isobutyl acetate, isoamyl acetate, methyl amyl acetate, or ethylene glycol monobutyl ether acetate; and a ketone-based solvent such as methyl isobutyl ketone, cyclohexanone, ethyl n-amyl ketone, or diisobutyl ketone. These may be used alone, or in combination of two or more kinds thereof.

In this regard, the resin composition according to the present invention may be an aqueous resin composition using an aqueous solvent, or may be a solvent-based resin composition using a hydrophobic organic solvent. In a case of being an aqueous resin composition, the resin composition according to the present invention may contain a hydrophobic organic solvent within the range not impairing the effects of the present invention, and in a case of being a solvent-based resin composition, the resin composition according to the present invention may contain an aqueous solvent within the range not impairing the effects of the present invention.

Into the resin composition according to the present invention, if necessary, various kinds of auxiliaries, for example, a curing agent of a resol-type phenol resin, an amino resin such as a melamine resin or a benzoguanamine resin, or the like, a surfactant, an antifoaming agent, wax, a pigment, an antioxidant, an antiseptic agent, and a rheology control agent can also be added.

In the resin composition according to the present invention, the mixing ratio of each component is not particularly limited, and the mixing ratio of non-volatile components of the anion-modified CNF in the resin composition is preferably 0.01 to 20%, more preferably 0.03 to 10%, and furthermore preferably 0.05 to 3%, from the viewpoints that the workability and smoothness after addition may be affected when the non-volatile content is large and the strength and adhesion may not be obtained when the non-volatile content is small.

Further, the mixing ratio of non-volatile components of the resin in the resin composition is preferably 1 to 80%, and more preferably 5 to 60%, from the viewpoints that the workability and smoothness after addition may be affected when the non-volatile content is large and the strength and adhesion may not be obtained when the non-volatile content is small.

In addition, the resin composition according to the present invention can be used as it is, or used as a coating material by being diluted with a solvent. The solvent can be appropriately selected from those mentioned in the description of the above resin composition.

The resin composition according to the present invention can be widely used for a general metal material, or a metal product, for details, an architectural material made of metal, automobile parts made of metal, a household electric appliance made of metal, desk equipment made of metal, or a coating material to coat a can made of metal. In particular, since a carboxymethylated cellulose nanofiber produced by using carboxymethylated cellulose, which is a food additive, as a raw material is non-toxic, a resin composition containing the carboxymethylated cellulose nanofiber is useful as a coating material for an inner surface of a can for food or drink.

In a case where the resin composition is used as a coating material for a can, as the material for the can, aluminum, a tin-plated steel sheet, a chrome-treated steel sheet, a nickel-treated steel sheet, or the like can be included. Such a material may be a material on a surface of which a surface treatment such as zirconium treatment or phosphoric acid treatment has been applied.

(Metal provided with coating film)

By applying a coating material containing the resin composition according to the present invention to a metal, and then by heating and drying the metal, a metal coated with a coating film derived from the resin composition can be obtained.

The method for applying the coating material containing the resin composition according to the present invention to a metal is not particularly limited, and examples of the method include known methods such as comma coater, roll coater, reverse roll coater, gravure coater, micro gravure coater, knife coater, bar coater, wire bar coater, die coater, dip coater, slot-die coater, spray coating, and an immersion method.

The metal to which the coating material containing the resin composition according to the present invention has been applied is baked preferably at 100 to 300°C for a period in the range of 1 second to 30 minutes. If the metal is baked in this range, a metal coated with a coating film that is excellent in the adhesion, strength, and smoothness can be obtained.

The thickness of the coating film is not particularly limited, and is preferably 0.02 to 100 $\mu$m and more preferably around 0.1 to 20 $\mu$m in terms of the dry film thickness.

The resin composition according to the present invention is excellent in the adhesion in a case of being applied as a coating material to a metal. This is because the adhesive area on the metal surface is increased by the presence of CNF in the coating material.

Further, the coating film derived from the resin composition according to the present invention is excellent in the film strength. This is because the structure of the coating film is maintained, the scratches are less likely to occur, and the deterioration of the coating film due to humidity or heat is suppressed, by the presence of CNF in the coating material.

In addition, the metal coated with the resin composition according to the present invention is excellent in the smoothness on the surface. This is because the CNF is a nano-sized material, and therefore, an adverse effect on the surface roughness after coating is not exerted, and the smoothness of the coating film is improved since the CNF improves the dispersibility of the pigment and the like in the coating material. Accordingly, in a case where the resin composition according to the present invention is used as a coating material for an inner surface of a can for a carbonated beverage, the generation of bubbles can be suppressed.

{Examples}

Hereinafter, the present invention will be described in more detail with reference to Examples, but the present invention is not limited to the following Examples. In this regard, unless the method for measuring/calculating each numerical value in each of Examples is particularly described, each numerical value is measured/calculated by the method described in the specification.

(Production Example 1)

In a stirrer capable of mixing pulp, 200 g of bleached kraft pulp (BKP, manufactured by NIPPON PAPER INDUSTRIES CO., LTD.) in terms of the dry mass, and 111 g of sodium hydroxide in terms of the dry mass were added, and then water was added so that the solid content of the pulp was 20% by mass. After that, the obtained mixture was stirred at 30°C for 30 minutes, and then 216 g of sodium monochloroacetate (in terms of the active component) was added to the stirred mixture. After stirring for 30 minutes, the mixture was heated up to 70°C and stirred for 1 hour. After that, the reactant was taken out and neutralized, and then the washing was performed to obtain carboxylmethylated pulp having a degree of substitution with carboxymethyl group per glucose unit of 0.25. After that, water was added so that the solid content of the carboxymethylated pulp was 1%, the resultant material was disintegrated by treating at 20°C under a pressure of 150 MPa five times with a high-pressure homogenizer, and thus an aqueous dispersion of carboxymethylated cellulose nanofibers was obtained. The obtained carboxymethylated cellulose nanofibers had an average fiber diameter of 30 nm and an aspect ratio of 40.

(Measurement method of degree of substitution with carboxymethyl group per glucose unit)

Around 2.0 g of carboxymethylated cellulose fibers (bone dry) was precisely weighed, and placed in a 300-mL Erlenmeyer flask with a stopper. Into the Erlenmeyer flask, 100 mL of a solution prepared by adding 10 mL of special grade concentrated nitric acid to 90 mL of methanol was added, and the mixture was shaken for 3 hours to convert the carboxymethylated cellulose salt (CM cellulose) to hydrogen-type CM cellulose. 1.5 to 2.0 g of hydrogen-type CM cellulose (bone dry) was precisely weighed, and placed in a 300-mL Erlenmeyer flask with a stopper. The hydrogen-type CM cellulose was wetted with 15 mL of 80% methanol, 100 mL of 0.1 N NaOH was added into the flask, and then the mixture was shaken at room temperature for 3 hours. By using phenolphthalein as an indicator, excess NaOH was back titrated with 0.1 N $H_2SO_4$. The degree of substitution with carboxymethyl group (DS) was calculated by the following equation:

$$A = [(100 \times F' - (0.1N \ H_2SO_4) \ (mL) \times F) \times 0.1] / (bone$$
$$dry \ mass \ (g) \ of \ hydrogen\text{-}type \ CM \ cellulose)$$

$$DS = 0.162 \times A / (1 - 0.058 \times A)$$

A: amount (mL) of 1N NaOH required for neutralization of 1 g of hydrogen-type CM cellulose
F: factor of 0.1 N $H_2SO_4$
F': factor of 0.1 N NaOH

(Production Example 2)

5.00 g (bone dry) of softwood-derived bleached unbeaten kraft pulp (brightness 85%) was added to 500 mL of an aqueous solution in which 39 mg of TEMPO (manufactured by Sigma-Aldrich Co. LLC, 0.05 mmol per gram of the bone-dry cellulose) and 514 mg of sodium bromide (1.0 mmol per gram of the bone-dry cellulose) had been dissolved, and the mixture was stirred until the pulp was uniformly dispersed. A sodium hypochlorite aqueous solution was added into the reaction system so that the sodium hypochlorite was 6.0 mmol/g, and the oxidation reaction was initiated. The pH in the system was decreased during the reaction, but a 3M aqueous sodium hydroxide solution was sequentially added to adjust the pH to 10. The reaction was terminated at the time point when the sodium hypochlorite was consumed and the pH in the system became constant. The mixture after the reaction was filtered through a glass filter to separate the pulp, and the pulp was thoroughly washed with water to obtain oxidized pulp (carboxylated cellulose). The yield of pulp was 90% at this time, the time required for the oxidation reaction was 90 minutes, and the amount of carboxy groups was 1.6 mmol/g. The obtained oxidized pulp was adjusted to 1.0% (w/v) with water, and the pulp was treated by an ultra-high-pressure homogenizer (20°C, 150 Mpa) three times to obtain an aqueous dispersion of oxidized cellulose nanofibers. The obtained oxidized cellulose nanofibers had an average fiber diameter of 3 nm and an aspect ratio of 250.

(Measurement method of amount of carboxy groups)

60 mL of 0.5% by mass slurry (aqueous dispersion) of carboxylated cellulose was prepared, a 0.1 M aqueous hydrochloric acid solution was added to the prepared slurry to adjust the pH to 2.5, and then while adding a 0.05 N aqueous sodium hydroxide solution dropwise into the solution, the electric conductivity was measured until the pH reached 11, and the amount of carboxy groups was calculated from the amount of sodium hydroxide (a) consumed in the neutralization stage of the weak acid with gradual changes in the electric conductivity by using the following equation:

$$\text{Amount of carboxy groups (mmol/g carboxylated cellulose)} = a \text{ (mL)} \times 0.05 \text{ / mass (g) of carboxylated cellulose}$$

{Example 1}

(Synthesis Example 1) Synthesis of acrylic polymer

In a reaction vessel equipped with a stirrer, a thermometer, a reflux condenser, a dropping tank, and a nitrogen gas introduction pipe, 510 parts of ethylene glycol monobutyl ether was charged, and the temperature was raised up to 110°C while stirring the charged material under introduction of nitrogen gas. While keeping the temperature inside the reaction vessel at 110°C, a mixture including 90 parts of ethyl acrylate, 75 parts of styrene, 135 parts of methacrylic acid, 4 parts of benzoyl peroxide, and 30 parts of ethylene glycol monobutyl ether was continuously added dropwise over 2 hours from the dropping tank.

From the time of 30 minutes after completion of the dropwise addition, 0.4 parts of benzoyl peroxide and 4 parts of ethylene glycol monobutyl ether were added every 30 minutes three times in total, the reaction was continued over 2 hours after completion of the dropwise addition, and as a result, an acrylic polymer having a non-volatile content of 35% and a weight average molecular weight of 33000 was obtained. In this regard, the weight average molecular weight was measured by using gel permeation chromatography (GPC), and the number average molecular weight in terms of polystyrene was calculated.

(Synthesis Example 2) Synthesis of modified epoxy resin

In a reaction vessel equipped with a stirrer, a thermometer, a reflux condenser, a dropping tank, and a nitrogen gas introduction pipe, 50 parts of JER1009 (manufactured by Japan Epoxy Resin Co., Ltd. epoxy equivalent 2950) as an epoxy resin and 95 parts of the acrylic polymer solution obtained in Synthesis Example 1 were charged, and the temperature was raised up to 120°C while stirring the charged materials under introduction of nitrogen gas to dissolve the epoxy resin. After that, the mixture was cooled down to 100°C, 15 parts of a 50% dimethylaminoethanol aqueous solution was added to the cooled mixture while keeping the temperature inside the reaction vessel at 100°C, and the obtained mixture was stirred over 2 hours. After that, 200 parts of ion exchanged water was added to the stirred mixture to obtain a modified epoxy resin dispersion having a non-volatile content of 25%.

(Production of aqueous resin composition)

In a reaction vessel equipped with a stirrer, a thermometer, a reflux condenser, a dropping tank, and a nitrogen gas introduction pipe, 140 parts of the modified epoxy resin dispersion obtained in Synthesis Example 2 and 107 parts of ion exchanged water were charged, and the temperature was raised up to 70°C while stirring the charged materials under introduction of nitrogen gas. Next, 55.5 parts of styrene, 22.1 parts of ethyl acrylate, and 4.1 parts of N-butoxymethyl acrylamide were charged in a dropping tank 1, 2.0 parts of a 1% hydrogen peroxide solution was charged in a dropping tank 2, 2.6 parts of a 1% aqueous sodium erythorbate solution was charged in a dropping tank 3, and the materials in the tanks were at the same time added dropwise in a reaction vessel over 2 hours under stirring while keeping the temperature inside the reaction vessel at 70°C. In one hour after completion of the dropwise addition, into the obtained mixture, 0.8 parts of a 1% hydrogen peroxide solution and 1.0 part of a 1% aqueous sodium erythorbate solution were added, and the resultant mixture was stirred over 1 hour after completion of the dropwise addition to obtain a polymer emulsion. After that, into the obtained polymer emulsion, 90 parts of the 1% aqueous dispersion of carboxymethylated cellulose nanofibers obtained in Production Example 1, 19.3 parts of n-butanol, and 23.6 parts of ethylene glycol monobutyl ether were added, and the mixture was filtered through a 5-$\mu$m filter to take out the content, and thus an aqueous resin composition having a non-volatile content of 23.2% was obtained. In this regard, the non-volatile content of CNF contained in this aqueous resin composition was 0.2%.

{Example 2}

In production of an aqueous resin composition, an aqueous resin composition was produced in a similar manner as in Example 1 except that the aqueous dispersion of oxidized cellulose nanofibers obtained in Production Example 2 was used in place of the aqueous dispersion of carboxymethylated cellulose nanofibers obtained in Production Example 1.

{Example 3}

Into an aqueous acrylic resin (WATERSOL S-727, manufactured by DIC Corporation), the 1% aqueous dispersion of carboxymethylated cellulose nanofibers obtained in Production Example 1 and ion exchanged water were added, and an aqueous resin composition having a non-volatile content of 23.2% was obtained. In this regard, the non-volatile content of CNF contained in this aqueous resin composition was 0.2%.

{Example 4}

In production of an aqueous resin composition, an aqueous resin composition was produced in a similar manner as in Example 3 except that an acrylic modified epoxy resin (MODEPICS 302 manufactured by Arakawa Chemical Industries, Ltd.) was used in place of the aqueous acrylic resin (WATERSOL S-727, manufactured by DIC Corporation) used in Example 3.

{Comparative Example 1}

In production of an aqueous resin composition, an aqueous resin composition was produced in a similar manner as in Example 1 except that the aqueous dispersion of cellulose nanofibers was not used. In this regard, the non-volatile content of the obtained aqueous resin composition was 23%.

By using each of the aqueous resin compositions obtained as described above, a test panel was prepared as follows, and the pencil hardness, the metal adhesion, and the smoothness were evaluated in accordance with the following criteria.

(Preparation conditions of test panel)

Each of the aqueous resin compositions was applied on an aluminum plate having a thickness of 0.26 mm so that the coating film had a thickness of 5 to 6 $\mu$m at the time of drying, and the baking and drying was performed at 200°C for 2 minutes to prepare a test panel. The results are shown in Table 1.

(Pencil hardness)

The pencil hardness was evaluated at ordinary temperature in accordance with JIS K5400. As the evaluation criteria, the highest hardness at which the coating film did not peel off was indicated.

S: 5H or more
A: 3H to 4H
B: H to 2H
C: F or less

(Metal adhesion)

In accordance with JIS K5400, a test panel was scratched in a grid pattern with a cutter knife, and the grid pattern part was peeled off with cellophane tape, and the number of remaining grid squares in 100 grid squares was counted to evaluate the metal adhesion.

A: The number of remaining grid squares is 90 or more.
C: The number of remaining grid squares is less than 90.

(Smoothness)

The state on a surface of a test panel, which was visually observed, was determined according to the following criteria.

S: Coating film defects such as undulation and pimples are not observed on a surface, and the surface is smooth and glossy.
A: Coating film defects such as undulation and pimples are not observed on a surface.
B: Coating film defects such as undulation and pimples are partially generated.
C: Coating film defects such as undulation and pimples are generated on the entire surface.

{Table 1}

| | | Example 1 | Example 2 | Example 3 | Example 4 | Comparative Example 1 |
|---|---|---|---|---|---|---|
| Kind of resin | | Modified epoxy resin | Modified epoxy resin | Aqueous acrylic resin | Acrylic modified epoxy resin | Modified epoxy resin |
| Kind of CNF modification | | Carboxymethylation | TEMPO oxidation | Carboxymethylation | Carboxymethylation | - |
| Content (%) of CNF in aqueous resin composition | | 0.2 | 0.2 | 0.2 | 0.2 | 0 |
| Evaluation | Pencil hardness | S | S | S | S | A |
| | Metal adhesion | A | A | A | A | C |
| | Smoothness | A | A | S | S | B |

As shown in Table 1, when a resin composition containing anion-modified CNF and a specific resin is used, a coating film that is excellent in the adhesion, the strength, and the smoothness can be obtained.

**Claims**

1. A resin composition comprising: at least one resin selected from an epoxy resin, a urethane resin, a fluorine resin, a silicone resin, an acrylic resin, and a vinyl-based resin; and an anion-modified cellulose nanofiber.

2. The resin composition according to claim 1, wherein the anion-modified cellulose nanofiber is a carboxymethylated cellulose nanofiber, or a 2,2,6,6-tetramethylpiperidine-1-oxy radical (TEMPO) oxidized cellulose nanofiber.

3. The resin composition according to claim 1 or 2, wherein the resin composition is an aqueous resin composition.

4. A coating material comprising the resin composition according to any one of claims 1 to 3.

5. A metal comprising a coating film obtained by applying the coating material according to claim 4 to the metal.

## INTERNATIONAL SEARCH REPORT

| | International application No. |
|---|---|
| | PCT/JP2019/024254 |

**A. CLASSIFICATION OF SUBJECT MATTER**
Int. Cl. C08L101/00(2006.01)i, C08L1/04(2006.01)i, C09D7/65(2018.01)i, C09D201/00(2006.01)i

According to International Patent Classification (IPC) or to both national classification and IPC

**B. FIELDS SEARCHED**

Minimum documentation searched (classification system followed by classification symbols)
Int. Cl. C08L101/00, C08L1/04, C09D7/65, C09D201/00

Documentation searched other than minimum documentation to the extent that such documents are included in the fields searched
Published examined utility model applications of Japan      1922-1996
Published unexamined utility model applications of Japan    1971-2019
Registered utility model specifications of Japan            1996-2019
Published registered utility model applications of Japan    1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2011-57749 A (DAI-ICHI KOGYO SEIYAKU CO., LTD.) | 1-5 |
| Y | 24 March 2011, claims, paragraphs [0018], [0030], [0031]-[0037], tables 1-3 (Family: none) | 5 |
| X | JP 2018-44100 A (DAI-ICHI KOGYO SEIYAKU CO., LTD.) | 1, 2, 4 |
| Y | 22 March 2018, claims, paragraphs [0018], [0024], | 5 |
| A | [0043]-[0047], [0077]-[0114], tables 1, 2 (Family: none) | 3 |
| X | JP 2013-181168 A (DAI-ICHI KOGYO SEIYAKU CO., LTD.) 12 September 2013, claims, paragraphs [0011], [0017], [0059]-[0093], tables 1-4 (Family: none) | 1-5 |

☒  Further documents are listed in the continuation of Box C.      ☐  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 21.08.2019 | 10.09.2019 |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2019/024254 |

C (Continuation).    DOCUMENTS CONSIDERED TO BE RELEVANT

| Category* | Citation of document, with indication, where appropriate, of the relevant passages | Relevant to claim No. |
| --- | --- | --- |
| X<br>Y | JP 2017-43647 A (DAI-ICHI KOGYO SEIYAKU CO., LTD.)<br>02 March 2017, claims, paragraphs [0011], [0022],<br>[0056], [0057], [0097]-[0141], tables 1-5 (Family:<br>none) | 1-4<br>5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05194908 A